# EUROPEAN PATENT APPLICATION

(11) **EP 4 418 381 A2**
(43) Date of publication of application: **21.08.2024**
(21) Application number: 23215331.2
(22) Date of filing: 08.12.2023
(51) Int. Cl.: H01M 10/04, H01M 50/103, H01M 50/166, H01M 50/627

(54) **MANUFACTURING METHOD OF SECONDARY BATTERY AND UTILIZATION THEREOF**

(30) Priority: 25.01.2023 JP 2023009627
(71) Applicant: Prime Planet Energy & Solutions, Inc., Chuo-ku Tokyo 103-0022 (JP)
(72) Inventor: YONEYAMA, Akihiro, Tokyo, 103-0022 (JP)
(74) Representative: Kuhnen & Wacker Patent- und Rechtsanwaltsbüro PartG mbB

(57) **Abstract**

A herein disclosed manufacturing method includes a battery case assembling step, a case deforming step, a liquid injecting step, and a sealing step. Here, the case deforming step is controlled to make an area size of the high expansion area EA in a front view be equal to or more than 1/3 of a total area size of an expansion surface 14a on a first side wall 14. By doing this, a whole plastic deformation due to an expansion from an inside is caused on the first side wall 14, and thus it is possible to suppress a size variation in the secondary batteries 1 after the manufacture.

## Description

### BACKGROUND

### 1. Technical Field

A technique disclosed herein relates to a manufacturing method of a secondary battery, a secondary battery, and a battery pack.

### 2. Description of the Related Art

The secondary battery, such as lithium ion secondary battery, has been widely used in various fields. This secondary battery has, for example, a configuration in which an electrode body and an electrolytic solution are accommodated inside a battery case. At that time, the most portion of the electrolytic solution is osmosed to an inside of the electrode body. In addition, the battery case of the secondary battery is provided with an electrolytic solution liquid injection hole that is configured to perform a liquid injection of the electrolytic solution. This electrolytic solution liquid injection hole is sealed by a sealing member after the liquid injection of the electrolytic solution is performed.

International Patent Publication 2018/155506 describes a battery module in which plural secondary batteries as described above are provided. In particular, the battery module described in this document includes plural battery cells (secondary batteries) laminated in one direction and then compressed, and includes a spacer being sandwiched by the plural battery cells in a manner opposed to side surfaces of the battery cells and including plural pressure adjusting parts that are arranged discretely and are subjected to a structure deformation so as to perform pressure fitting onto side surfaces of the battery cells. By doing this, it is possible to absorb an accumulation of size errors of the battery cells so as to implement a predetermined size.

### SUMMARY

However, regarding the technique making the spacer absorb the size variations as described in Patent Document 1, there is a limitation of a range of the absorbable size variation. Thus, recently, a technique is requested that can easily suppress the size variations themselves of the secondary batteries. The herein disclosed technique has been made in view of the above-described circumstances, and has an object of providing a technique capable of suppressing the size variations of the secondary batteries.

In order to implement the above described object, the herein disclosed technique provides a manufacturing method of a secondary battery including a below described configuration (hereinafter, simply referred to as "manufacturing method", too).

A herein disclosed manufacturing method is a manufacturing method of a secondary battery that comprises an electrode body including a positive electrode and a negative electrode, an electrolytic solution, and a battery case configured to accommodate an electrode body and an electrolytic solution. The battery case comprises an outer case including a bottom part being a long rectangular plate-shaped member, a pair of first side walls extending upward from long sides of the bottom part, a pair of second side walls extending upward from short sides of the bottom part, and an upper surface opening surrounded by top ends of the first side walls and the second side walls, and a sealing plate configured to seal the upper surface opening and provided with an electrolytic solution liquid injection hole. The manufacturing method comprises a battery case assembling step for sealing the upper surface opening by the sealing plate under a state where the electrode body is arranged inside the outer case, so as to assemble the battery case, a case deforming step for injecting a gas via the electrolytic solution liquid injection hole to an inside of the battery case having been assembled so as to deform the battery case, a liquid injecting step for injecting the electrolytic solution via the electrolytic solution liquid injection hole to the inside of the battery case having been deformed, and a sealing step for sealing the electrolytic solution liquid injection hole of the battery case into which the electrolytic solution is injected. In the case deforming step, an expansion surface is formed on at least one of the pair of first side walls, the expansion surface protrudes from a center part of the first side walls in a first direction which go away from the electrode body. The expansion surface includes a top part which is a portion having the largest protruding amount in the first direction, and a reference part which is a portion having the smallest protruding amount. Here, the protruding amount from the reference part to the top part in the first direction is defined as a maximum expansion width H, an area where the protruding amount from the reference part is equal to or more than 1/2 of the maximum expansion width H is defined as a high expansion area. The case deforming step is controlled to make an area size of the high expansion area in a front view be equal to or more than 1/3 of a total area size of the expansion surface.

In the herein disclosed manufacturing method, a case deforming step is performed at which a gas is injected to an inside of a battery case after the assembly so as to deform the battery case. By doing this, a whole deformation due to an expansion from the inside is caused on a first side wall of the battery case, and thus it is possible to suppress the size variation in the secondary batteries after the manufacture. Furthermore, the case deforming step of the herein disclosed manufacturing method is controlled to make an area size of a high expansion area where a protruding amount from a reference surface is equal to or more than a certain level become equal to or more than 1/3 of a total area size of an expansion surface. By doing this, an expansion of the first side surface exceeds an elastic range so as to cause a plastic deformation, and thus it is possible to inhibit the size variation due to a contraction after the case deforming step.

### BRIEF DESCRIPTION OF THE DRAWINGS

FIG. 1 is a perspective view that schematically shows an appearance of a secondary battery in accordance with one embodiment.
FIG. 2 is a longitudinal cross section view that schematically shows an inside structure of the secondary battery shown in FIG. 1.
FIG. 3 is a front view that schematically shows the appearance of the secondary battery in accordance with one embodiment.
FIG. 4 is a IV-IV cross section view of FIG. 3.
FIG. 5 is a V-V cross section view of FIG. 3.
FIG. 6 is a flowchart for explaining a manufacturing method in accordance with one embodiment.
FIG. 7 is a perspective view that is to explain a connection of a sealing plate and an electrode body at a battery case assembling step.
FIG. 8 is a longitudinal cross section view that is to explain a gas injection to an inside of a battery case at a case deforming step.
FIG. 9 is a longitudinal cross section view that is to explain a liquid injection of an electrolytic solution at a liquid injecting step.
FIG. 10 is a perspective view that schematically shows an appearance of a battery pack in accordance with one embodiment.

### DETAILED DESCRIPTION

Below, one embodiment of a herein disclosed technique will be described in detail, by reference to the accompanying drawings. Incidentally, the matters other than matters particularly mentioned in this specification, and required for practicing the herein disclosed technique can be grasped as design matters of those skilled in the art based on the related art in the present field. The herein disclosed technique can be executed based on the contents disclosed in the present specification, and the technical common sense in the present field. Additionally, in the following drawings, it will be explained while the members/parts providing the same effect are provided with the same numerals and signs. Furthermore, the dimensional relation (such as length, width, and thickness) in each drawing does not reflect the actual dimensional relation.

In the present specification, a term "secondary battery" generally represents an electric storage device that can repeatedly perform a charge and discharge by moving a charge carrier between a positive electrode and a negative electrode via an electrolyte. The above described "secondary battery" semantically covers a so-called storage battery, such as lithium ion secondary battery, nickel hydrogen battery, and nickel cadmium battery, additionally a capacitor, such as electric double layer capacitor, and the like. In other words, the herein disclosed manufacturing method is not restricted to a method for manufacturing a specific kind of battery, and can be widely applied to a manufacture of a general electric storage device in which the electrode body and the electrolytic solution are accommodated inside the battery case.

### 1. Structure of secondary battery

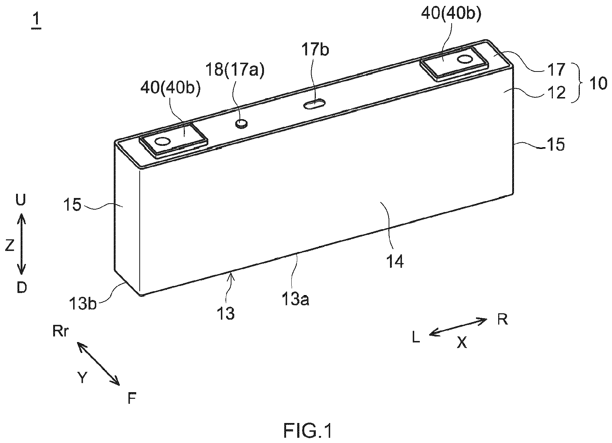

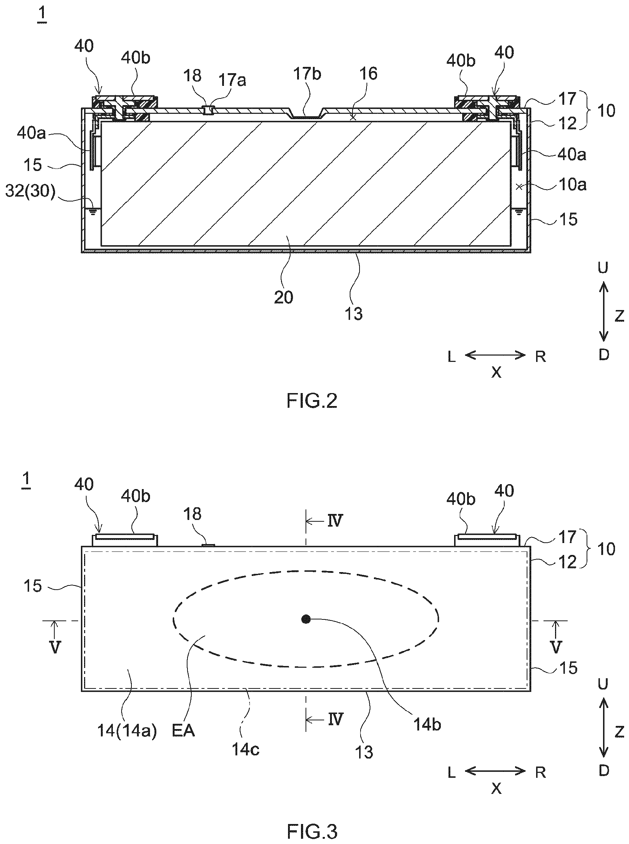

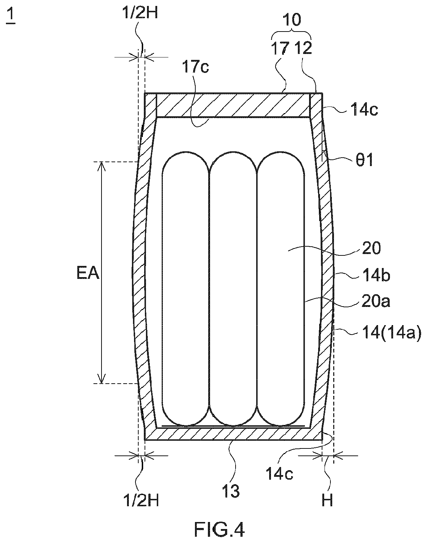

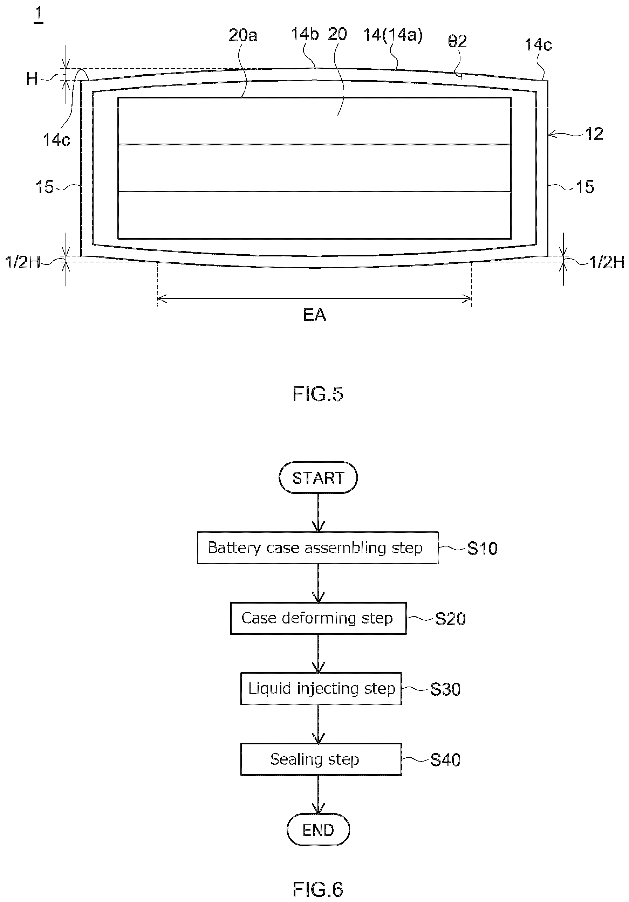

At first, a structure of the secondary battery in accordance with the present embodiment will be explained. FIG. 1 is a perspective view that schematically shows an appearance of the secondary battery in accordance with the present embodiment. FIG. 2 is a longitudinal cross section view that schematically shows an inside structure of the secondary battery shown in FIG. 1. FIG. 3 is a front view that schematically shows the appearance of the secondary battery in accordance with the present embodiment. In addition, FIG. 4 is a IV-IV cross section view of FIG. 3. FIG. 5 is a V-V cross section view of FIG. 3. Incidentally, in FIG. 1 to FIG. 5, a reference sign X represents a width direction, a reference sign Y represents a depth direction, and a reference sign Z represents a height direction. Furthermore, reference signs L, R, F, Rr, U, and D respectively represent leftward, rightward, frontward, rearward, upward, and downward. However, these directions are defined for convenience sake of explanation, and are not intended to restrict a disposed aspect of the secondary battery during use or during manufacture.

As shown in FIG. 1 and FIG. 2, the secondary battery 1 in the present embodiment includes a battery case 10, an electrode body 20, and an electrolytic solution 30. Below, each member configuring the secondary battery 1 will be particularly explained.

### (1) Battery case

The battery case 10 in the present embodiment is a container formed in a box shape and having an internal space 10a. In the internal space 10a of this battery case 10, the electrode body 20 and the electrolytic solution 30 are accommodated. As shown in FIG. 1 and FIG. 2, the secondary battery 1 in accordance with the present embodiment includes a battery case 10 formed in a flat rectangular parallelepiped shape. In addition, it is preferable that the battery case 10 is a metal member whose strength is equal to or more than a certain level. As an example of a material of the battery case 10, it is possible to use aluminum, aluminum alloy, or the like. Incidentally, although it is not intended to restrict a herein disclosed technique, an inside capacity of the battery case 10 is preferably equal to or more than 500 cm³, or further preferably equal to or more than 1000 cm³. The secondary battery 1 having a large capacity as described above requires a large amount of the electrolytic solution 30, and thus an effect of the herein disclosed technique will be further suitably exhibited. Incidentally, an upper limit of an inside capacity of the battery case 10, which is not particularly restricted, might be equal to or less than 3000 cm³, or might be equal to or less than 1500 cm³. In addition, the herein disclosed technique can be applied to a small battery being equal to or less than 300 cm³ (typically, equal to or less than 150 cm³).

In addition, the battery case 10 in the present embodiment includes an outer case 12 and a sealing plate 17. Below, each member will be described.

### (a) Outer case

The outer case 12 is a flat box-shaped body whose upper surface is opened. In particular, the outer case 12 includes a bottom part 13 being a long rectangular plate-shaped member, a pair of first side walls 14 extending upward U from long sides 13a (sides along a width direction X) of the bottom part 13, a pair of second side walls 15 extending upward U from short sides 13b (sides along a depth direction Y) of the bottom part 13, and an upper surface opening 16 surrounded by top ends of the first side walls 14 and the second side walls 15. In other words, the first side wall 14 is a side wall whose area size is relatively large. On the other hand, the second side wall 15 is a side wall whose area size is relatively small. Regarding the battery case 10, which includes the outer case 12 having the configuration described above, the first side wall 14 is preferentially deformed (expanded) when an internal pressure is increased. By doing this, it is possible to easily control a deformed position or a deformed amount at a later described case deforming step S20, and thus it is possible to properly suppress the size variation of the secondary batteries 1.

In addition, a particular size of the outer case 12 can be suitably changed unless the effect of the herein disclosed technique is significantly inhibited. For example, a height (a size in a height direction Z) of the first side wall 14 is preferably equal to or more than 5 cm, or further preferably equal to or more than 8 cm. Then, a width (a size in the width direction X) of the first side wall 14 is preferably equal to or more than 20 cm, or further preferably equal to or more than 25 cm. As described above, by forming the first side wall 14 having the height and width (in other words, an area size) equal to or more than a certain size, it becomes easier to deform the first side wall 14 at the capacity increasing step S20. On the other hand, upper limits of the height and the width of the first side wall 14 are not particularly restricted. For example, the height of the first side wall 14 might be equal to or less than 12 cm, or might be equal to or less than 10 cm. In addition, the width of the first side wall 14 might be equal to or less than 35 cm, or might be equal to or less than 30 cm. Incidentally, an aspect ratio of the first side wall 14 (a ratio of the height with respect to the width) is preferably equal to or more than 2, or further preferably equal to or more than 3. By doing this, it becomes furthermore easier to deform the first side wall 14. On the other hand, an upper limit of the aspect ratio of the first side wall 14, which is not particularly restricted, might be equal to or less than 8, or might be equal to or less than 5.

In addition, a width (a size in the depth direction Y) of the second side wall 15 is preferably equal to or less than 5 cm, or further preferably equal to or less than 4 cm. As described above, by making the width of the second side wall 15 be narrower, it is possible to suitably suppress the deformation of the second side wall 15. On the other hand, a lower limit of the width of the second side wall 15, which is not particularly restricted, might be equal to or more than 1 cm, or might be equal to or more than 3 cm. Incidentally, a height (a size in the height direction Z) of the second side wall 15 is set to be the same height as the first side wall 14.

In addition, a thickness (a size in the depth direction Y) of the first side wall 14 is preferably equal to or less than 3 mm, further preferably equal to or less than 2 mm, or furthermore preferably equal to or less than 1.5 mm. By doing this, it becomes easier to deform the first side wall 14. On the other hand, from a perspective of securing a strength of the battery case 10, a thickness of the first side wall 14 is preferably equal to or more than 0.15 mm, or further preferably equal to or more than 0.2 mm. On the other hand, it is preferable that the bottom part 13 and the second side wall 15 are thicker than the first side wall 14. By doing this, it becomes furthermore easier to deform the first side wall 14. Incidentally, a particular thickness of the bottom part 13 is preferably equal to or more than 0.5 mm, or further preferably equal to or more than 1 mm. By doing this, it is possible to suitably suppress the deformation of the bottom part 13. On the other hand, in consideration of a weight or a material cost of the secondary battery 1, the thickness of the bottom part 13 is preferably equal to or less than 4 mm, further preferably equal to or less than 3 mm, or furthermore preferably equal to or less than 2.5 mm. In addition, a thickness (a size in the width direction X) of the second side wall 15 is preferably equal to or more than 0.15 mm, or further preferably equal to or more than 0.2 mm. By doing this, it is possible to suppress the deformation of the second side wall 15. On the other hand, in consideration of a weight or a material cost of the secondary battery 1, the thickness of the second side wall 15 is preferably equal to or less than 3 mm, further preferably equal to or less than 2 mm, or furthermore preferably equal to or less than 1.5 mm.

### (b) Sealing plate

The sealing plate 17 is a plate-shaped member that is configured to seal the upper surface opening 16 of the outer case 12. On this sealing plate 17, an electrolytic solution liquid injection hole 17a is provided to inject the electrolytic solution 30 to an inside of the battery case 10. On the secondary battery 1 after the manufacture, the electrolytic solution liquid injection hole 17a is sealed by the sealing member 18. Incidentally, it is preferable that the sealing plate 17 is also thicker than the first side wall 14. By doing this, it is possible to suppress the deformation of the sealing plate 17 at the case deforming step S20. In particular, the thickness of the sealing plate 17 is preferably equal to or more than 1 mm, or further preferably equal to or more than 1.5 mm. On the other hand, in consideration of a weight or a material cost of the secondary battery 1, the thickness of the sealing plate 17 is preferably equal to or less than 5 mm, or further preferably equal to or less than 4 mm.

Additionally, on the sealing plate 17 in the present embodiment, a gas exhaust valve 17b is formed. The gas exhaust valve 17b is a thin-walled part formed to have a thickness being thinner than the other portion of the sealing plate 17. This gas exhaust valve 17b is cleaved when the internal pressure of the battery case 10 drastically rises due to generation of a decomposition gas, or the like. By doing this, it is possible to inhibit an excess deformation of the secondary battery 1 during a charge and discharge. Incidentally, the thickness of the gas exhaust valve 17b is preferably equal to or less than 0.5 mm, or further preferably equal to or less than 0.3 mm. By doing this, it is possible to properly operate the gas exhaust valve 17b when the internal pressure rises during the charge and discharge. On the other hand, a lower limit of the thickness of the gas exhaust valve 17b is preferably equal to or more than 0.05 mm, or further preferably equal to or more than 0.1 mm. By doing this, it is possible to suppress a malfunction of the gas exhaust valve 17b at the case deforming step S20.

In addition, on the sealing plate 17, a pair of electrode terminals 40 are attached. Each of the electrode terminals 40 is a structure body in which plural conductive members are combined, and extends along the height direction Z. Then, an electrical collector member 40a configuring a lower end part of the electrode terminal 40 is connected to the electrode body 20 inside the battery case 10. Incidentally, as shown in FIG. 4, according to the present embodiment, each of the pair of electrode terminals 40 includes plural (3 in FIG. 4) electrical collector members 40a. On the other hand, an outside terminal 40b configuring a top end part of the electrode terminal 40 is exposed to an outside of the battery case 10. Incidentally, as a structure of the electrode terminal 40, it is possible to use a structure capable of being applied to a general secondary battery without particular restriction, and a detailed explanation of it is omitted because it is not to restrict the herein disclosed technique.

### (2) Electrode body

As described above, the electrode body 20 is accommodated inside the battery case 10. As shown in FIG. 4, according to the present embodiment, the plural (3 in FIG. 4) electrode bodies 20 are accommodated inside the battery case 10. However, the number of the electrode bodies 20 is not particularly restricted, and might be 1. In addition, as the illustration is omitted, an insulation sheet is arranged between the electrode body 20 and the outer case 12. By doing this, it is possible to inhibit a conduction between the electrode body 20 and the battery case 10.

The electrode body 20 includes the positive electrode and the negative electrode. The electrode body 20 in the present embodiment is a wound electrode body formed in a flat shape. In particular, the electrode body 20 is formed by winding a laminate body that is consisted by laminating a long sheet-shaped positive electrode and negative electrode via a separator. Incidentally, as a material of each member (the positive electrode, the negative electrode, the separator, or the like) configuring the electrode body 20, it is possible to use a material capable of being utilized in the general secondary battery without particular restriction, and a detailed explanation of it is omitted because it is not to restrict the herein disclosed technique. In addition, the electrode body 20 is accommodated in the battery case 10 to make a winding axis of it be along the long side 13a of the bottom part 13 of the outer case 12. Thus, in the secondary battery 1 of the present embodiment, a flat surface 20a of the electrode body 20 and the first side wall 14 of the outer case 12 are opposed.

Incidentally, a size of the electrode body 20 is not particularly restricted, and suitably adjusted in consideration of a relation between a battery performance and a production efficiency. In particular, the excess space (an inside capacity of the battery case - a volume of the electrode body) of the battery case 10 is increased by reducing a size of the electrode body 20, and thus it is possible to increase an one-time injected liquid amount at a later described liquid injecting step S30. By doing this, it is possible to contribute in enhancing the production efficiency. From a perspective described above, it is preferable to set a size of the electrode body 20 so as to make the excess space inside the battery case 10 be equal to or more than 50 cm³ (further suitably equal to or more than 100 cm³, or furthermore suitably equal to or more than 150 cm³). On the other hand, by increasing the size of the electrode body 20, it is possible to enhance a battery performance, such as battery capacity. From a perspective described above, it is preferable to set the size of the electrode body 20 so as to make the excess space inside the battery case 10 be equal to or less than 250 cm³ (further suitably, equal to or less than 200 cm³, or furthermore suitably equal to or less than 170 cm³). Incidentally, the herein disclosed manufacturing method expands the battery case 10 at the case deforming step S20. By doing this, the inside capacity of the battery case 10 is increased, and thus it is possible to implement a high production efficiency even in a case where the excess space inside the battery case 10, just after the battery case assembling step S10, is equal to or less than 170 cm³.

### (3) Electrolytic solution

The electrolytic solution 30 is, together with the electrode body 20, accommodated inside the battery case 10. In particular, the electrolytic solution 30 is osmosed to an inside of the electrode body 20 (to an electrode gap between the positive electrode and the negative electrode). In addition, a part of the electrolytic solution 30 might exist as an excess electrolytic solution 32 at an outside of the electrode body 20 (between the electrode body 20 and the battery case 10). By doing this, when the electrolytic solution 30 is decomposed at the inside of the electrode body 20, it is possible to supply the excess electrolytic solution 32 to the inside of the electrode body 20. Incidentally, as a component of the electrolytic solution 30, it is possible to use one capable of being utilized in the general secondary battery without particular restriction, and a detailed explanation of it is omitted because it is not to restrict the herein disclosed technique.

### (4) Shape of first side wall

Here, in the present embodiment, the battery case 10 is expanded at the later described case deforming step S20. Thus, as shown in FIG. 3 to FIG. 4, regarding the secondary battery 1 after the manufacture, an expansion surface 14a is formed on the first side wall 14 of the battery case 10. The expansion surface (14a) protrudes from a center part of the first side walls (14) in a first direction. The first direction is a direction go away from the electrode body 20 (toward an outer side in the depth direction Y of FIG. 3). Although details are described later, by causing the expansion deformation as described above during the manufacturing step, it is possible to suppress the size variation in the secondary batteries 1 after the manufacture.

Within an area of this expansion surface 14a, a top part 14b is formed, which is a portion having the largest protruding amount from the electrode body 20 (typically, the flat surface 20a of the electrode body 20) in the first direction (the depth direction Y). On the other hand, within the area of the expansion surface 14a, a reference part 14c is also formed, which is a portion having the smallest protruding amount from the electrode body 20 in the first direction. As shown by a dashed line part of FIG. 3, the reference part 14c in the present embodiment is formed at an outer periphery edge part of the first side wall 14. This outer periphery edge part of the first side wall 14 is connected to any of the bottom part 13, the second side wall 15, and the sealing plate 17, and thus the expansion deformation due to the internal pressure rise is hardly caused. Thus, regarding the secondary battery 1 after the manufacture, the reference part 14c tends to be formed at the outer periphery edge part of the first side wall 14. On the other hand, regarding the secondary battery 1 in accordance with the present embodiment, the top part 14b is formed at a vicinity of a center part of the first side wall 14. The vicinity of the center part of the first side wall 14 is a portion furthest from the outer periphery edge part, and thus the expansion deformation due to the internal pressure rise tends to be caused easily. Thus, in the secondary battery 1 after the manufacture, the top part 14b tends to be formed at the vicinity of the center part of the first side wall 14.

Then, in the present specification, the protruding amount from the reference part 14c to the top part 14b in the first direction (the depth direction Y) is defined as "maximum expansion width H" (see FIG. 4 and FIG. 5). This maximum expansion width H is preferably equal to or more than 1.2 mm, further preferably equal to or more than 1.3 mm, furthermore preferably equal to or more than 1.4 mm, or preferably in particular equal to or more than 1.5 mm. By doing this, it is possible to properly cause a plastic deformation on the battery case 10, and thus it is possible to further suitably inhibit the size variation due to a contraction of the battery case 10. On the other hand, the maximum expansion width H is preferably equal to or less than 2.0 mm, further preferably equal to or less than 1.9 mm, furthermore preferably equal to or less than 1.8 mm, or preferably in particular equal to or less than 1.7 mm. By doing this, it is possible to suppress a strength reduction of the battery case 10 due to an excess deformation.

Additionally, in the present specification, an area where the protruding amount from the reference part 14c is equal to or more than 1/2 of the maximum expansion width H is defined as "high expansion area EA". Although details are described later, regarding the manufacturing method in accordance with the present embodiment, a whole deformation due to the expansion from the inside is caused onto the first side wall 14 of the battery case 10. Thus, in the secondary battery 1 after the manufacture, as shown by a dotted line part of FIG. 3, the high expansion area EA having an approximately oval shape in a front view is formed. Then, the top part 14b being the most expanded portion is formed at a vicinity of a center of the high expansion area EA. Incidentally, an aspect ratio of the high expansion area EA is preferably equal to or more than 1.5, further preferably equal to or more than 1.6, furthermore preferably equal to or more than 1.8, or preferably in particular equal to or more than 2. By doing this, it is possible to properly cause the plastic deformation on the battery case 10. On the other hand, an upper limit of the aspect ratio of the high expansion area EA, which is not particularly restricted, might be equal to or less than 5, might be equal to or less than 4, or might be equal to or less than 3. Incidentally, the aspect ratio of the high expansion area EA in the present specification is a ratio of a long axis length with respect to a short axis length of the high expansion area EA.

### 2. Manufacturing method of secondary battery

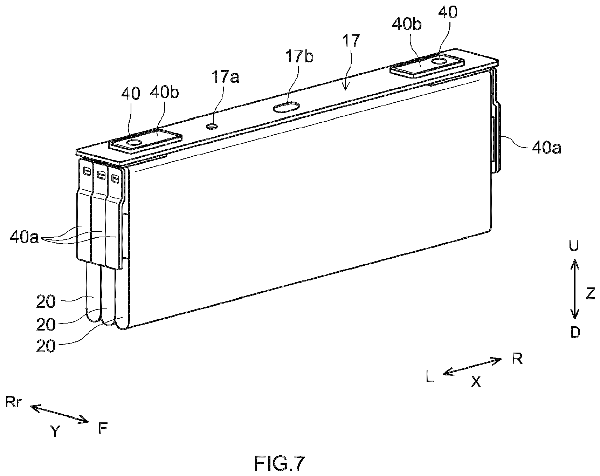

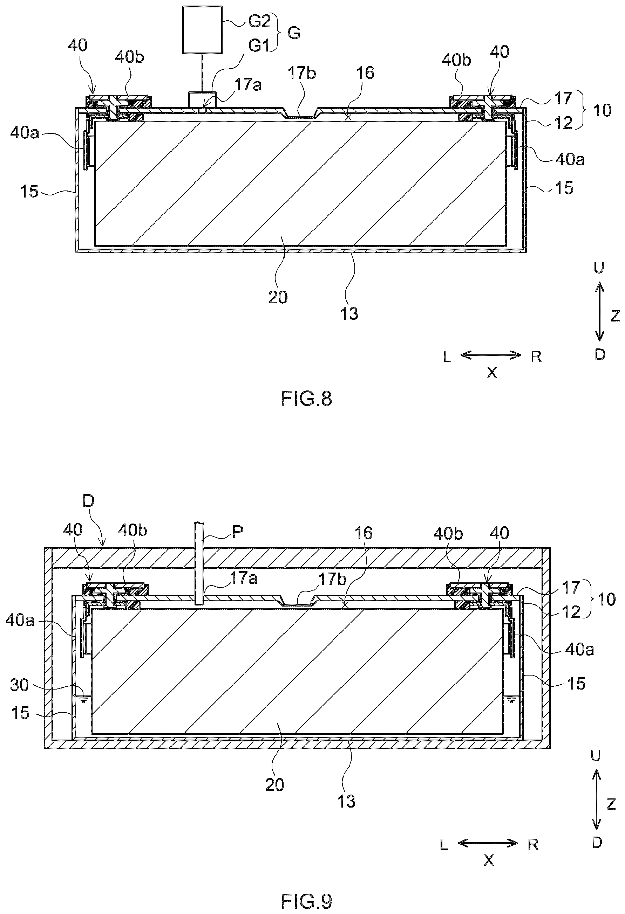

Next, a method for manufacturing the secondary battery 1 including the above described configuration will be described. FIG. 6 is a flowchart that is to explain the manufacturing method in accordance with the present embodiment. In addition, FIG. 7 is a perspective view that is to explain a connection of the sealing plate and the electrode body at the battery case assembling step. FIG. 8 is a perspective view that is to explain a gas injection to the inside of the battery case at the case deforming step. FIG. 9 is a perspective view that is to explain the liquid injection of the electrolytic solution at the liquid injecting step.

As shown in FIG. 6, the manufacturing method in accordance with the present embodiment includes at least the battery case assembling step S10, the case deforming step S20, the liquid injecting step S30, and the sealing step S40. Below, each of the steps will be described.

### (1) Battery case assembling step S10

At the present step, the upper surface opening 16 is sealed by the sealing plate 17 under a state where the electrode body 20 is arranged inside the outer case 12, so as to assemble the battery case 10. An example of a particular procedure of the present steps will be described below. At first, as shown in FIG. 7, the electrical collector member 40a of the electrode terminal 40 is connected to each of the plural electrode bodies 20. By doing this, the sealing plate 17 and the electrode body 20 are integrated. Under this state, the electrode body 20 is inserted from the upper surface opening 16 to the inside of the outer case 12. Then, by further lowering the electrode body 20 and the sealing plate 17, the upper surface opening 16 of the outer case 12 is closed by the sealing plate 17. Then, top ends of the first side wall 14 and the second side wall 15 of the outer case 12 and an outer periphery edge part of the sealing plate 17 are joined. By doing this, it is possible to construct the battery case 10 in which the electrode body 20 is accommodated at the internal space 10a. Incidentally, as for joining the sealing plate 17 and the outer case 12, it is possible to use a conventionally known joining means without particular restriction. As a suitable example of the joining means described above, it is possible to use a laser welding or the like.

Here, the outer cases 12 and the sealing plates 17, which are supplied to the present step, normally have the size variation due to a manufacture tolerance. In addition, by an external force, heat, or the like at the time when various members are assembled during the present step, the outer case 12 or the sealing plate 17 might be deformed a little. Thus, the battery cases 10 constructed at the present step have the size variation equal to or more than a certain level. Then, if the size variation of the battery cases 10 becomes too larger, a restriction pressure at a battery pack construction time becomes not-consistent further, and thus it becomes a reason for reducing the battery performance.

### (2) Case deforming step S20

Regarding the manufacturing method in accordance with the present embodiment, in order to solve the above described size variation of the battery cases 10, the case deforming step S20 is performed. At this case deforming step S20, by injecting a gas via the electrolytic solution liquid injection hole 17a to the inside of the battery case 10 after the assembly, the battery case 10 is deformed. By doing this, the first side wall 14 of the battery case 10 is expanded, so as to form the expansion surface 14a. As an example, at the present step, a gas supplying means G as shown in FIG. 8 is used. The gas supplying means G includes a supply port G1 and a gas generation source G2. The supply port G1 is configured to seal the inside of the battery case 10 when attached to the electrolytic solution liquid injection hole 17a. On the other hand, as the gas generation source G2, various equipments configured to generate a high pressure gas (compressor, gas cylinder, or the like) can be used. Then, at the present step, the supply port G1 is attached to the electrolytic solution liquid injection hole 17a, and then the gas generation source G2 is driven. By doing this, the case internal pressure rises so that the first side wall 14 is expanded and deformed, as a whole. By doing this, it is possible to cause the deformation on the battery case 10, the deformation exceeding the size variation caused at the battery case assembling step S10, and thus it is possible to match the shapes of the secondary batteries 1 after the manufacture.

However, based on an examination of the present inventor, if the deformed amount at the present step is too small, the deformed amount of the first side wall 14 might not exceed an elastic range and the battery case 10 might be contracted after the present step ends. In this case, the shape of the battery case 10 returns to the shape before the gas injection, the size variation of the battery cases 10 before the gas injection is still remained. On the other hand, regarding the manufacturing method in accordance with the present embodiment, for making the expansion of the first side wall 14 exceed the elastic range so as to cause the plastic deformation, the deformed amount of the battery case 10 at the case deforming step S20 is controlled as described below. Incidentally, the control on the deformed amount at the case deforming step S20 described below can be, for example, implemented by a means for detecting the shape of the battery case 10 after a predetermined amount of the gas is injected to the battery case 10 and then for adjusting the gas injection amount based on the detected result. Incidentally, in a case where the detected deformed amount of the battery case 10 satisfies a desired range, it is not required to adjust the gas injection amount.

Particularly, the case deforming step according in the present embodiment is controlled to make an area size of the high expansion area EA in a front view (see FIG. 3) be equal to or more than 1/3 of a total area size of the expansion surface 14a. As described above, if the deformation is caused to make the high expansion area EA be equal to or more than the certain level is formed, the expansion of the first side wall 14 exceeds the elastic range so as to cause the plastic deformation. By doing this, after the present step, it is possible to inhibit the size variation due to the contraction of the battery cases 10 from being caused. Incidentally, it is further preferable that a ratio of the area size of the high expansion area EA with respect to the total area size of the expansion surface 14a is equal to or more than 1/2. By doing this, it is possible to further suitably cause the plastic deformation on the first side wall 14. On the other hand, an upper limit value of the ratio of the area size of the high expansion area EA with respect to the total area size of the expansion surface 14a, which is not particularly restricted, might be equal to or less than 4/5, might be equal to or less than 3/4, or might be equal to or less than 2/3.

Incidentally, it is preferable that the deformed amount at the case deforming step S20 is set to make an inclined angle θ1 of the expansion surface 14a along the height direction Z be equal to or more than a certain level. By doing this, it is possible to further properly cause the plastic deformation on the first side wall 14. In particular, FIG. 4 is a cross section view that is shown along a vertical direction (the height direction Z) passing through a center in a long side direction (the width direction X) of the first side wall 14 of FIG. 3. When this FIG. 4 is confirmed, it is preferable that the inclined angle θ1 of the expansion surface 14a on an area 1 cm downward from a lower surface 17c of the sealing plate 17 is equal to or more than 3° (further suitably equal to or more than 4°, furthermore suitably equal to or more than 5°, or suitably in particular equal to or more than 6°). By expanding the first side wall 14 so as to cause this kind of inclined angle θ1, it is possible to further suitably inhibit the contraction of the battery case 10 after the case deforming step S20. On the other hand, from a perspective of suppressing a strength reduction in the battery case 10 due to an excess deformation, an upper limit value of the inclined angle θ1 is preferably equal to or less than 10°, preferably equal to or less than 9°, preferably equal to or less than 8°, or preferably equal to or less than 7°.

Similarly, it is preferable that the deformed amount at the case deforming step S20 is set to make the inclined angle θ2 of the expansion surface 14a along the width direction X be equal to or more than a certain level. By doing this, it is possible to further properly cause the plastic deformation on the first side wall 14. In particular, FIG. 5 is a cross section view that is shown along the long side direction (the width direction X) passing through the center in the vertical direction (the height direction Z) of the first side wall 14 of FIG. 3. When this FIG. 5 is confirmed, it is preferable that the inclined angle θ2 of the expansion surface 14a on an area 2.3 mm inward from a boundary between the first side wall 14 and the second side wall 15 is equal to or more than 0.5° (further suitably equal to or more than 1°, furthermore suitably equal to or more than 1.5°, or suitably in particular equal to or more than 2°). By expanding the first side wall 14 to cause the inclined angle θ2 as described above, it is possible to further suitably inhibit the contraction of the battery case 10 after the case deforming step S20. On the other hand, from a perspective of suppressing the strength reduction on the battery case 10 due to the excess deform, the upper limit value of the inclined angle θ2 is preferably equal to or less than 5°, preferably equal to or less than 4.5°, preferably equal to or less than 4°, or preferably equal to or less than 3.5°.

Additionally, in the battery case 10 after the case deforming step S20, the inside capacity is increased. By doing this, the one time injected liquid amount at the described later liquid injecting step S30 is increased, and thus it is possible to contribute in greatly enhancing the manufacture efficiency. In consideration of the increase of the injected liquid amount at the liquid injecting step S30, it is preferable that the present step is performed to make the increase amount of the inside capacity be equal to or more than 40 cm³ (further suitably equal to or more than 70 cm³, or furthermore suitably equal to or more than 100 cm³). By doing this, it is possible to contribute in greatly enhancing the manufacture efficiency. In addition, by causing the large expansion as described above, the plastic deformation on the battery case 10 tends to be easily caused, and thus it is possible to suitably suppress the size variation after the manufacture. On the other hand, it is preferable that the increase amount of the inside capacity is set to be within a range where a breakage of the battery case 10 (the gas exhaust valve 17b, a join portion between the sealing plate 17 and the outer case 12, or the like) can be inhibited. In particular, the upper limit value of the increase amount of the inside capacity is preferably equal to or less than 200 cm³, further preferably equal to or less than 150 cm³, or preferably in particular equal to or less than 120 cm³.

Incidentally, the pressure of the gas supplied to the battery case 10 is preferably equal to or more than 0.03 MPa, further preferably equal to or more than 0.05 MPa, or preferably in particular equal to or more than 0.10 MPa. By doing this, it is possible to properly cause the plastic deformation of the battery case 10. On the other hand, the upper limit of the gas pressure is preferably equal to or less than 0.20 MPa, further preferably equal to or less than 0.15 MPa, or preferably in particular equal to or less than 0.12 MPa. By doing this, it is possible to suppress the breakage of the battery case 10. In addition, the gas supply time is preferably equal to or more than 5 sec, further preferably equal to or more than 10 sec, or furthermore preferably equal to or more than 12 sec. By doing this, it is possible to properly cause the plastic deformation of the battery case 10. On the other hand, from a perspective of shortening the manufacture time, the gas supply time is preferably equal to or less than 30 sec, or further preferably equal to or less than 20 sec. However, the pressure or the supply time for the above described gas can be suitably changed in a manner dependent on the strength or the inside capacity of the battery case 10, and is not to restrict the herein disclosed technique. A general person skilled in the art for this field can easily analyze the gas supply condition with which the area size of the high expansion area EA becomes equal to or more than 1/3 of the total area size of the expansion surface 14a, by performing preliminary tests for plural times. In addition, the gas used at the present step is not particularly restricted unless significantly inhibiting the performance of the secondary battery 1 after the manufacture. As an example of the gas described above, it is possible to use air, helium gas, nitrogen gas, argon gas, or the like. In addition, from a perspective of suppressing the performance reduction due to a moisture contamination, it is preferable that a dry processing is performed on the gas before the battery case 10 is supplied.

Incidentally, as described above, by using the flat battery case 10, the first side wall 14 whose area size is relatively large is preferentially expanded, and thus it becomes capable of managing the deformed position or the deformed amount at the present step. Incidentally, based on an experiment performed by the present inventor, it is observed on the expansion surface 14a after the deformation that the top part 14b is formed at a portion a little upward from the center portion in the height direction Z. Particularly, in a case where the height size of the first side wall 14 is treated as 100%, the expansion surface 14a at which the top part 14b is positioned is formed within a range of 50.5% to 52.5% from the lower end of the first side wall 14 (for example, a position corresponding to about 51%). In addition, it is also observed that, if the flat battery case 10 is expanded, the second side wall 15 whose area size is relatively smaller is recessed a little toward the inside of the battery case 10.

### (3) Liquid injecting step S30

At the present step, the electrolytic solution 30 is injected via the electrolytic solution liquid injection hole 17a to the inside of the battery case 10 after the deformation. As an example, at the present step, the electrolytic solution 30 is injected according to a following procedure. At first, as shown in FIG. 9, a liquid injection nozzle P is inserted into the electrolytic solution liquid injection hole 17a. Then, the electrolytic solution 30 is injected from the liquid injection nozzle P to the inside of the battery case 10. At that time, in order to avoid the electrolytic solution 30 from gushing out from the electrolytic solution liquid injection hole 17a, the electrolytic solution 30 is dividedly and separately injected for several times while the electrolytic solution 30 is made to be osmosed to the inside of the electrode body 20. At that time, if the battery case 10 is expanded at the case deforming step S20, the electrolytic solution amount capable of being supplied by the one liquid injection is increased. As this result, the liquid injection number of the electrolytic solution 30 at the present step is reduced, and thus it is also possible to contribute in drastically improving the manufacture efficiency.

In addition, at the liquid injecting step S30, a decompress processing is performed to reduce the pressure inside the battery case 10. By doing this, the inside of the electrode body 20 (the electrode gap between the positive electrode and the negative electrode) becomes a negative pressure. When the electrolytic solution 30 is injected under this state, the electrolytic solution 30 is sucked to the inside of the electrode body 20 which has become the negative pressure. By doing this, it is possible to shorten the time required for making the electrolytic solution 30 be osmosed. Incidentally, the decompress processing of the manufacturing method in accordance with the present embodiment is performed under a state where the battery case 10 is accommodated in a decompressing chamber D as shown in FIG. 9. By doing this, it is possible to suppress the battery case 10 from being contracted due to a pressure difference between the inside and the outside of the battery case 10, and thus it is possible to inhibit the size variation from being caused on the battery cases 10 after the liquid injecting step S30.

Incidentally, the internal pressure of the battery case 10 during the decompress processing is preferably equal to or less than -50 kPa, or further preferably equal to or less than -80 kPa. By doing this, it is possible to suitably shorten the osmose time of the electrolytic solution 30. On the other hand, in a case where the inside of the decompressing chamber D is decompressed, a lower limit value of the pressure during the decompress processing is not particularly restricted unless the decompressing chamber D is broken. For example, the lower limit value of the pressure inside the decompressing chamber D might be equal to or more than -100 kPa. Incidentally, the decompress processing is not an essential processing of the liquid injecting step S30. For example, if an electrode body in which the electrolytic solution is easily osmosed (a laminate electrode body, or the like) is used, the electrolytic solution might be injected under an atmospheric pressure environment without the decompress processing.

### (4) Sealing step S40

At the present step, the electrolytic solution liquid injection hole 17a of the battery case 10 after the liquid injection is sealed. By doing this, the secondary battery 1 (see FIG. 1) is constructed in which the electrode body 20 and the electrolytic solution 30 are accommodated inside the battery case 10 having been hermetically sealed. Incidentally, the sealing member 18 configured to seal the electrolytic solution liquid injection hole 17a is not to restrict the herein disclosed technique, and thus a conventionally known member can be used without particular restriction. As an example of this sealing member 18, it is possible to use a blind rivet or the like. In addition, after the electrolytic solution liquid injection hole 17a is sealed by the sealing member 18, the sealing member 18 might be welded to the battery case 10 (the sealing plate 17). By doing this, it is possible to further firmly fix the sealing member 18.

### (5) Summary

As described above, in the manufacturing method according to the present embodiment, the case deforming step S20 is performed at which the gas is injected to the inside of the battery case 10 after the assembly so as to deform the battery case 10. By doing this, the whole deformation due to the expansion from the inside is caused on the first side wall 14 of the battery case 10, and thus it is possible to suppress the size variation in the secondary batteries 1 after the manufacture. Furthermore, at the case deforming step S20 in the present embodiment, the gas is injected to the inside of the battery case 10 to make the area size of the high expansion area EA become equal to or more than 1/3 of the total area of the expansion surface 14a. By doing this, the expansion of the first side wall 14 exceeds the elastic range so as to cause the plastic deformation, and thus it is possible to inhibit the size variation due to the contraction after the case deforming step S20.

### 3. Battery pack

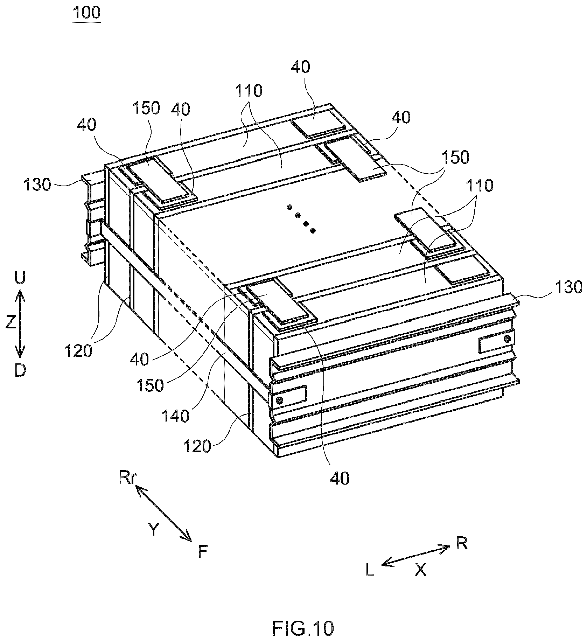

Next, the manufacturing method in accordance with the present embodiment can contribute in a performance improvement of the battery pack 100 including the plural secondary batteries. FIG. 10 is a perspective view that schematically shows an appearance of the battery pack in accordance with the present embodiment. Below, while referring to FIG. 10, a particular explanation will be described.

As shown in FIG. 10, the battery pack 100 in accordance with the present embodiment includes plural single-batteries 110. Regarding respective single-batteries 110, the first side walls 14 of the battery cases 10 (see FIG. 1) are aligned to be mutually opposed. In addition, between two adjacent single-batteries 110, a spacer 120 is arranged. Then, these plural single-batteries 110 are sandwiched by a pair of restriction plates 130. The pair of restriction plates 130 are connected by a cross-linking member 140 extending along an arrangement direction (the depth direction Y in FIG. 10). By doing this, each of the single-batteries 110 is restricted by a predetermined restriction pressure. In addition, the battery pack 100 shown in FIG. 10 includes a connecting member 150 that is configured to electrically connect respective of the plural single-batteries 110. This connecting member 150 connects electrode terminals 40 of the adjacent single-batteries 110. By doing this, the battery pack 100 including the plural single-batteries 110 can be used as one battery unit.

Then, in the battery pack 100 according to the present embodiment, the secondary battery 1 having the above described configuration is used on 90% or more of the plural single-batteries 110. In other words, 90% or more of the single-batteries 110 in the present embodiment are secondary batteries 1, in which the expansion surface 14a is formed on the first side wall 14 and the area size of the high expansion area EA of the expansion surface 14a is equal to or more than 1/3 of the total area size of the expansion surface 14a. By doing this, it is possible to control the shapes of the single-batteries 110 constructing the battery pack 100, and thus it is possible to impart an uniform restriction pressure to each of the single-batteries 110. As this result, the battery pack 100 in accordance with the present embodiment can exhibit a high performance as a whole battery unit. Incidentally, regarding the manufacturing method in accordance with the present embodiment, it is possible to use the secondary battery 1 including the above described configuration as for all (100%) of the plural single-batteries 110 configuring the battery pack 100. The battery pack 100 described above, where the size variation in the single-batteries 110 is caused little, can exhibit the particularly high battery performance. In addition, the herein disclosed technique can be applied in particular suitably to the battery pack 100 in which the number of the single-batteries 110 is equal to or more than 20 (further suitably equal to or more than 40, furthermore suitably equal to or more than 60, or suitably in particular equal to or more than 80). According to the herein disclosed technique, even in the case of the battery pack 100 including so many single-batteries 110, it can be easy to match the shapes of respective single-batteries 110.

### 4. Another embodiment

Above, an embodiment of the manufacturing method disclosed herein is explained. Incidentally, the herein disclosed manufacturing method is not restricted to the above described embodiment, and various matters can be changed suitably. Below, an example of the matter capable of being changed from the above described embodiment will be described.

### (1) Drying step

The herein disclosed manufacturing method might include steps, other than the 4 steps S10 to S40 shown in FIG. 6. For example, after the battery case assembling step S10 is performed and before the liquid injecting step S30 is started, a drying step might be performed to dry the electrode body inside the battery case. By doing this, it is possible to inhibit the performance reduction (a capacity reduction, an output reduction, or the like) due to the moisture invaded into the electrode body. Incidentally, at the drying step, it is preferable that heating is performed while the inside of the battery case is decompressed. By doing this, it is possible to efficiently remove the moisture inside the electrode body. For example, a heating temperature at the drying step is preferably equal to or more than 80°C, further preferably equal to or more than 90°C, or preferably in particular equal to or more than 100°C. By doing this, it is possible to suitably remove the moisture inside the electrode body. In addition, the heating temperature is preferably equal to or less than 200°C, further preferably equal to or less than 150°C, or preferably in particular equal to or less than 120°C. By doing this, it is possible to suppress a degradation on the resin-made member (a separator, an insulation film, or the like). In addition, it is preferable that the pressure inside the battery case during the drying step is decompressed to be -6 Pa to -10 Pa. By doing this, it is possible to easily remove the evaporated moisture.

Incidentally, the drying step can be performed without particular restriction, if it is performed after the battery case assembling step S10 is performed and before the liquid injecting step S30 is started, as described above. In consideration of maintaining the shape of the battery case 10, it is preferable that the drying step is performed before the case deforming step S20. In particular, at the drying step, a pressure reduction due to the decompressing process, a pressure rise due to a moisture evaporation, or the like might be caused, and thus there is a possibility that the battery case 10 is deformed. On the other hand, if the case deforming step S20 is performed after the drying step, it is possible to cause the deformation on the battery case 10 that exceeds the size variation caused at the drying step, and thus it can be easy to match the shapes of the battery cases 10.

### (2) Initial charging step

In addition, regarding the herein disclosed manufacturing method, an initial charging step might be performed between the liquid injecting step S30 and the sealing step S40. At this initial charging step, an external charge apparatus is connected to the electrode terminal 40 under a state where the electrolytic solution liquid injection hole 17a is opened, and then the charge is performed to reach a predetermined voltage at a room temperature (for example, 20°C to 30°C extent). By doing this, a part of the electrolytic solution 30 is decomposed so as to generate a large amount of decomposition gas. By performing this initial charge before the sealing step S40, it is possible to inhibit the gas exhaust valve from being operated during the initial charge. In addition, if the initial charge is performed after the sealing step S40, there is a possibility that the internal pressure rise due to the generation of the decomposition gas makes the first side wall 14 of the battery case 10 be further expanded. Then, even the gas generation amounts at that time includes individual differences, and thus it might cause the size variations in the secondary batteries 1 after the manufacture if the initial charge is performed in a state where the electrolytic solution liquid injection hole 17a is sealed. Even from the perspective described above, it is preferable that the initial charging step is performed before the sealing step S40 at which the electrolytic solution liquid injection hole 17a is sealed. Incidentally, the charge condition for the initial charging step, which is not particularly restricted, can be suitably changed on the basis of the standard of the manufacture target (secondary battery). Additionally, in a case where the initial charging step has been performed, it is preferable that a decompression processing is performed before the sealing step S40. By doing this, it is possible to properly exhaust the decomposition gas generated at the initial charging step.

### (3) Leak inspecting step

In the herein disclosed manufacturing method, it is preferable that a leak inspecting step is performed after the case deforming step S20 is performed and before the sealing step S40 is started (suitably, just after the case deforming step S20). By doing this, it is possible to detect a breakage of the battery case (the gas exhaust valve, the join portion with the sealing plate and the outer case, or the like) caused by the case deforming step S20. As an example of a particular procedure of the leak inspecting step, it is possible to use a following procedure. At the leak inspecting step, firstly, an inspection gas (for example, helium gas) for the leak inspection is filled inside the battery case. Then, by using an inspection apparatus configured to detect the inspection gas, a leakage of the inspection gas from the inside of the battery case is inspected. By doing this, it is possible to perform the inspection for presence or absence of the breakage of the battery case or a breakage position. Incidentally, the leak inspecting step can be included in the above described case deforming step S20. In particular, the case deforming step S20 might use the inspection gas, as the gas to be injected into the battery case, and might make the battery case be deformed while the inspection for the leakage of the inspection gas is performed by the inspection apparatus. By doing this, it is possible to expand the battery case while observing the presence or absence of the breakage.

### (4) Formation target for expansion surface

As shown in FIG. 4 and FIG. 5, regarding the secondary battery 1 in accordance with the above described embodiment, the expansion surfaces 14a are formed on both of the pair of first side walls 14. However, the expansion surface in accordance with the herein disclosed technique might be formed on only one of the pair of first side walls. For example, at the case deforming step S20, if the gas is injected to the inside of the battery case in a state where a plate-shaped deformation regulating member is pressed onto one of the first side walls, the expansion surface can be formed on only one of the pair of first side walls. According to the aspect described above, it is possible to suppress the size increase of the battery case in the depth direction Y, and additionally to cause the appropriate plastic deformation on the first side wall being the deformation target. On the other hand, in consideration of improving the manufacture efficiency by the inside capacity increase of the battery case 10, it is preferable as shown in the above described embodiment that the expansion surfaces 14a are formed on both of the first side walls 14.

Above, the embodiments of the herein disclosed technique have been explained. However, the above described explanation is merely an illustration, and is not to restrict the scope of claims. The technique recited in the scope of claims includes contents in which the specific examples illustrated in the above explanation are variously deformed or changed.

In other words, the herein disclosed technique contains contents of [Item 1] to [Item 11].

### [Item 1]

A manufacturing method of a secondary battery,
the secondary battery comprises:
an electrode body including a positive electrode and a negative electrode;
an electrolytic solution; and
a battery case configured to accommodate the electrode body and the electrolytic solution,
the battery case comprises:
   an outer case including a bottom part being a long rectangular plate-shaped member, a pair of first side walls extending upward from long sides of the bottom part, a pair of second side walls extending upward from short sides of the bottom part, and an upper surface opening surrounded by top ends of the first side walls and the second side walls; and
   a sealing plate configured to seal the upper surface opening and provided with an electrolytic solution liquid injection hole,
   the manufacturing method, comprises:
      a battery case assembling step for sealing the upper surface opening by the sealing plate under a state where the electrode body is arranged inside the outer case, so as to assemble the battery case;
      a case deforming step for injecting a gas via the electrolytic solution liquid injection hole to an inside of the battery case having been assembled so as to deform the battery case;
      a liquid injecting step for injecting the electrolytic solution via the electrolytic solution liquid injection hole to the inside of the battery case having been deformed; and
      a sealing step for sealing the electrolytic solution liquid injection hole of the battery case into which the electrolytic solution is injected, wherein
      in the case deforming step, an expansion surface is formed on at least one of the pair of first side walls, the expansion surface protrudes from a center part of the first side walls in a first direction which go away from the electrode body,
      the expansion surface includes a top part which is a portion having the largest protruding amount in the first direction, and a reference part which is a portion having the smallest protruding amount,
      the protruding amount from the reference part to the top part in the first direction is defined as a maximum expansion width H,
      an area where the protruding amount from the reference part is equal to or more than 1/2 of the maximum expansion width H is defined as a high expansion area,
      the case deforming step is controlled to make an area size of the high expansion area in a front view be equal to or more than 1/3 of a total area size of the expansion surface.

### [Item 2]

The manufacturing method recited in item 1, wherein
each of the first side walls has a height being equal to or more than 5 cm, and has a width being equal to or more than 20 cm.

### [Item 3]

The manufacturing method recited in item 1 or 2, wherein
the case deforming step is controlled to make an aspect ratio of the high expansion area in a front view be equal to or more than 2.

### [Item 4]

The manufacturing method recited in any one of items 1 to 3, wherein
the case deforming step is controlled to make an inclined angle of the expansion surface on an area directed from a lower surface of the sealing plate toward a 1 cm downward portion be equal to or more than 5° in a cross section, which passes through a center of the first side walls in a long side direction and exists along a vertical direction.

### [Item 5]

The manufacturing method recited in any one of items 1 to 4, wherein
the case deforming step is controlled to make an inclined angle of the expansion surface on an area directed from a boundary between the first side walls and the second side walls toward a 2.3 mm inward portion be equal to or more than 1° in a cross section, which passes through a center of the first side walls in a vertical direction and exists along a long side direction.

### [Item 6]

A secondary battery comprising:
an electrode body including a positive electrode and a negative electrode;
an electrolytic solution; and
a battery case that is configured to accommodate the electrode body and the electrolytic solution,

the battery case comprises:
   an outer case including a bottom part being a long rectangular plate-shaped member, a pair of first side walls extending upward from long sides of the bottom part, a pair of second side walls extending upward from short sides of the bottom part, and an upper surface opening surrounded by top ends of the first side walls and the second side walls; and
   a sealing plate configured to seal the upper surface opening, wherein
the battery case further comprises an expansion surface formed on at least one of the pair of first side walls, the expansion surface protrudes from a center part of the first side walls in a first direction which go away from the electrode body,
the expansion surface includes a top part which is a portion having the largest protruding amount in the first direction, and a reference part which is a portion having the smallest protruding amount,
the protruding amount from the reference part to the top part in the first direction is defined as a maximum expansion width H,
an area where the protruding amount from the reference part is equal to or more than 1/2 of the maximum expansion width H is defined as a high expansion area,
an area size of the high expansion area in a front view be equal to or more than 1/3 of a total area size of the expansion surface.

### [Item 7]

The secondary battery recited in item 6, wherein
each of the first side walls has a height being equal to or more than 5 cm, and has a width being equal to or more than 20 cm.

### [Item 8]

The secondary battery recited in item 6 or 7, wherein
an aspect ratio of the high expansion area in a front view is equal to or more than 2.

### [Item 9]

The secondary battery recited in any one of items 6 to 8, wherein
an inclined angle of the expansion surface on an area directed from a lower surface of the sealing plate toward a 1 cm downward portion is equal to or more than 5° in a cross section, which passes through a center of the first side walls in a long side direction and exists along a vertical direction.

### [Item 10]

The secondary battery recited in any one of items 6 to 9, wherein
an inclined angle of the expansion surface on an area directed from a boundary between the first side wall and the second side wall toward a 2.3 mm inward portion is equal to or more than 1° in a cross section, which passes through a center of the first side walls in a vertical direction and exists along a long side direction.

### [Item 11]

A battery pack comprising:
plural single-batteries; and
a connecting member configured to electrically connect each of the plural single-batteries, wherein
   each of 90% or more of the plural single-batteries is the secondary battery recited in any one of items 6 to 10.

## Claims

1. A manufacturing method of a secondary battery (1),
the secondary battery (1) comprises:
an electrode body (20) including a positive electrode and a negative electrode;
an electrolytic solution (30); and
a battery case (10) configured to accommodate the electrode body (20) and the electrolytic solution (30),
the battery case (10) comprises:
an outer case (12) including a bottom part (13) being a long rectangular plate-shaped member, a pair of first side walls (14) extending upward from long sides of the bottom part (13), a pair of second side walls (15) extending upward from short sides of the bottom part (13), and an upper surface opening (16) surrounded by top ends of the first side walls (14) and the second side walls (15); and
a sealing plate (17) configured to seal the upper surface opening (16) and provided with an electrolytic solution liquid injection hole (17a),
the manufacturing method, comprises:
a battery case assembling step for sealing the upper surface opening (16) by the sealing plate (17) under a state where the electrode body (20) is arranged inside the outer case (12), so as to assemble the battery case (10);
a case deforming step for injecting a gas via the electrolytic solution liquid injection hole (17a) to an inside of the battery case (10) having been assembled so as to deform the battery case (10);
a liquid injecting step for injecting the electrolytic solution (30) via the electrolytic solution liquid injection hole (17a) to the inside of the battery case (10) having been deformed; and
a sealing step for sealing the electrolytic solution liquid injection hole (17a) of the battery case (10) into which the electrolytic solution (30) is injected, wherein
in the case deforming step, an expansion surface (14a) is formed on at least one of the pair of first side walls (14), the expansion surface (14a) protrudes from a center part of the first side walls (14) in a first direction which go away from the electrode body (20),
the expansion surface (14a) includes a top part (14b) which is a portion having the largest protruding amount in the first direction, and a reference part (14c) which is a portion having the smallest protruding amount,
the protruding amount from the reference part (14c) to the top part (14b) in the first direction is defined as a maximum expansion width H,
an area where the protruding amount from the reference part (14c) is equal to or more than 1/2 of the maximum expansion width H is defined as a high expansion area (EA),
the case deforming step is controlled to make an area size of the high expansion area (EA) in a front view be equal to or more than 1/3 of a total area size of the expansion surface (14a).

2. The manufacturing method according to claim 1, wherein
each of the first side walls (14) has a height being equal to or more than 5 cm, and has a width being equal to or more than 20 cm.

3. The manufacturing method according to claim 1 or 2, wherein
the case deforming step is controlled to make an aspect ratio of the high expansion area (EA) in a front view be equal to or more than 2.

4. The manufacturing according to any one of claims 1 to 3, wherein
the case deforming step is controlled to make an inclined angle of the expansion surface (14a) on an area directed from a lower surface of the sealing plate (17) toward a 1 cm downward portion be equal to or more than 5° in a cross section, which passes through a center of the first side walls (14) in a long side direction and exists along a vertical direction.

5. The manufacturing method according to any one of claims 1 to 4, wherein
the case deforming step is controlled to make an inclined angle of the expansion surface (14a) on an area directed from a boundary between the first side walls (14) and the second side walls (15) toward a 2.3 mm inward portion be equal to or more than 1° in a cross section, which passes through a center of the first side walls (14) in a vertical direction and exists along a long side direction.

6. A secondary battery (1) comprising:
an electrode body (20) including a positive electrode and a negative electrode;
an electrolytic solution (30); and
a battery case (10) that is configured to accommodate the electrode body (20) and the electrolytic solution (30),
the battery case (10) comprises:
an outer case (12) including a bottom part (13) being a long rectangular plate-shaped member, a pair of first side walls (14) extending upward from long sides of the bottom part (13), a pair of second side walls (15) extending upward from short sides of the bottom part (13), and an upper surface opening (16) surrounded by top ends of the first side walls (14) and the second side walls (15); and
a sealing plate (17) configured to seal the upper surface opening (16), wherein
the battery case (10) further comprises an expansion surface (14a) formed on at least one of the pair of first side walls (14), the expansion surface (14a) protrudes from a center part of the first side walls (14) in a first direction which go away from the electrode body (20),
the expansion surface (14a) includes a top part (14b) which is a portion having the largest protruding amount in the first direction, and a reference part (14c) which is a portion having the smallest protruding amount,
the protruding amount from the reference part (14c) to the top part (14b) in the first direction is defined as a maximum expansion width H,
an area where the protruding amount from the reference part (14c) is equal to or more than 1/2 of the maximum expansion width H is defined as a high expansion area (EA),
an area size of the high expansion area (EA) in a front view be equal to or more than 1/3 of a total area size of the expansion surface (14a).

7. The secondary battery (1) according to claim 6, wherein
each of the first side walls (14) has a height being equal to or more than 5 cm, and has a width being equal to or more than 20 cm.

8. The secondary battery (1) according to claim 6 or 7, wherein
an aspect ratio of the high expansion area (EA) in a front view is equal to or more than 2.

9. The secondary battery (1) according to any one of claims 6 to 8, wherein
an inclined angle of the expansion surface (14a) on an area directed from a lower surface of the sealing plate (17) toward a 1 cm downward portion is equal to or more than 5° in a cross section, which passes through a center of the first side walls (14) in a long side direction and exists along a vertical direction.

10. The secondary battery (1) according to any one of claims 6 to 9, wherein
an inclined angle of the expansion surface (14a) on an area directed from a boundary between the first side wall (14) and the second side wall (15) toward a 2.3 mm inward portion is equal to or more than 1° in a cross section, which passes through a center of the first side walls (14) in a vertical direction and exists along a long side direction.

11. A battery pack (100) comprising:
plural single-batteries (110); and
a connecting member(150) configured to electrically connect each of the plural single-batteries (110), wherein
each of 90% or more of the plural single-batteries (110) is the secondary battery (1) according to any one of claims 6 to 10.
